# EUROPÄISCHE PATENTSCHRIFT

(11) **EP 1 206 756 B1**
(45) Veröffentlichungstag und Bekanntmachung des Hinweises auf die Patenterteilung: **10.12.2003**
(21) Anmeldenummer: 00938555.0
(22) Anmeldetag: 16.05.2000
(51) Int. Cl.: G07F 7/10, G07F 19/00, H04Q 7/32

(54) **TELEKOMMUNIKATIONS-ENDGERÄT**
TELECOMMUNICATIONS TERMINAL
TERMINAL DE TELECOMMUNICATION

(30) Priorität: 27.08.1999 DE 19940823
(43) Veröffentlichungstag der Anmeldung: 22.05.2002
(73) Patentinhaber: SIEMENS AKTIENGESELLSCHAFT, 80333 München (DE)
(72) Erfinder: GOECKE, Albrecht, D-81479 München (DE); MENTZ, Stephan, D-85386 Eching (DE); PRANGE, Stefan, D-81476 München (DE); PROHASKA, Bernd, D-93191 Rettenbach (DE); THOMFOHRDE, Heiner, D-85716 Unterschleissheim (DE); WEGHORST, Ingo, D-81677 München (DE)
(86) Internationale Anmeldenummer: DE0001546
(87) Internationale Veröffentlichungsnummer: WO01016897

(56) Entgegenhaltungen:
- WO-A-98/11519
- WO-A-98/34203
- WO-A-98/58510
- WO-A-99/00773
- WO-A-99/08238

## Beschreibung

Die Erfindung betrifft ein Telekommunikations-Endgerät nach dem Oberbegriff des Anspruchs 1.

Bei modernen Telekommunikations-Endgeräten (worunter im folgenden auch Endgerätekonfigurationen unter Einschluss von Zusatzkomponenten verstanden werden sollen) sind verschiedene Möglichkeiten der Eingabe und Speicherung von benutzerspezifischen Daten und auch zur Übermittlung solcher Daten an einen anderen Teilnehmer bekannt.

Hierzu zählen beispielsweise die seit langem bekannten, separaten oder auch in ein herkömmliches Festnetztelefon integrierten Anrufbeantworter, bei denen über Spracheingabe eine benutzerspezifische Information in einem Halbleiterspeicher oder auf Band gespeichert und im Falle eines nicht entgegengenommenen Anrufes an den anrufenden Teilnehmer übermittelt wird.

In gewissem Sinne sind auch die Rufnummernspeicher von modernen Festnetztelefonen oder Mobiltelefonen (hier auch als "Telefonbuch" bezeichnet) als Speicher für benutzerspezifische Daten anzusehen, die über eine Eingabe des Benutzers gespeist werden und durch geeignete Auswahlmittel zugreifbar sind, um eine gespeicherte Rufnummer entweder über eine Anzeigeeinheit auszugeben oder direkt eine Verbindung zu dieser herzustellen (oder beides).

In gewissem Sinne realisieren auch die zur Ausführung des SMS (Short Message Service) oder E-Mail bei Mobiltelefonen vorgesehenen internen Speichermittel zur Zwischenspeicherung einer Kurznachricht und zu deren Absendung an einen gewünschten Empfänger nach Beendigung der Eingabe eine Konfiguration nach dem Oberbegriff des Anspruchs 1.

Dokument WO98/34203-A offenbart finanzbezogene Identifizierungscodes, z.B. Kreditkartennummern, welche unmittelbar in einer mobilen Telekommunikationseinheit, z.B. einem Handy, gespeichert sind. Diese Identifizierungscodes werden per Radiowellen oder Infrarotsignal an einen Händler übermittelt, so dass die Transaktion zügig vonstatten gehen kann, da sie nicht mehr verbal spezifiziert werden muss.

Obgleich also bei modernen Telekommunikations-Endgeräten eine Vielzahl verschiedener Speichermöglichkeiten für benutzerspezifische Daten bekannt ist und es in diesem Zusammenhang weiterhin bekannt ist, derartige Daten unmittelbar aus der jeweiligen Speichereinrichtung einer Übertragungseinrichtung zur Übermittlung an einen anderen Teilnehmer zuzuführen, gibt es in bestimmten Anwendungsfällen durchaus umständliche und zudem hinsichtlich der Zuverlässigkeit und der Datenübertragung und der Sicherheit der übertragenen Daten vor unbefugtem Zugriff unbefriedigende Handhabungen.

So hat es sich in den letzten Jahren eingebürgert, dass eine Vielzahl von verschiedensten Dienstleistungen - etwa die Lieferung bestimmter Waren, eine Flugbuchung, eine Reisebuchung oder auch eine finanzielle Transaktion - über ein Telekommunikationsnetz abgewickelt werden kann, wobei der Besteller bzw. Käufer lediglich die Nummer und den Gültigkeitszeitraum einer Kreditkarte oder Kundenkarte o. ä. an den Verkäufer bzw. Lieferanten fernmündlich durchgibt. Er muss zu diesem Zweck vor dem Telefonat oder gar während desselben die entsprechende Karte zücken oder die Daten gegebenenfalls aus einem Organizer bzw. einer Datenbasis abfragen, wo er sie zwischengespeichert hat, um sie dann per Spracheingabe dem Teilnehmer am anderen Endgerät mitzuteilen. Insbesondere in stark geräuschbelasteten Umgebungen ist diese Art der Übermittlung alles andere als zuverlässig, so dass folgenschwere Verständigungsfehler auftreten können. Des weiteren ist es in vielen Anwendungsfällen, wo die Mitteilung nicht völlig abgeschirmt von Dritten erfolgt, durchaus möglich, dass die entsprechende Ziffernfolge bei der akustischen Eingabe mitgehört wird und die Kreditkartennummer so in falsche Hände gerät.
Letztlich ist diese Art der Handhabung von Kredit- bzw. Kundenkartennummern mit einer für den Benutzer höchst unangenehmen "Fummelei" verbunden und in manchen Situationen - beispielsweise während einer Autofahrt - praktisch gar nicht möglich.

Der Erfindung liegt daher die Aufgabe zugrunde, ein verbessertes Telekommunikations-Endgerät der gattungsgemäßen Art anzugeben, das eine erleichterte Bestellung von Waren oder Dienstleistungen über ein Telekommunikationsnetz ermöglicht.

Diese Aufgabe wird gelöst durch ein Telekommunikations-Endgerät mit den Merkmalen des Anspruchs 1.

Die Erfindung schließt den wesentlichen Gedanken ein, in dem Telekommunikations-Endgerät Mittel zur Speicherung mindestens einer Ziffernfolge und zu deren Übertragung während des Bestehens einer Verbindung im Ansprechen auf die Aktivierung geeigneter Betätigungsmittel durch den Nutzer vorzusehen. Im Unterschied etwa zu einem Anrufbeantworter kommt es hierbei darauf an, dass die Speichereinrichtung nicht anstelle des eigentlichen Endgerätes als Verbindungspartner für einen ankommenden Ruf geschaltet wird, sondern dass die Zuschaltung während einer normalen Endgeräte-Verbindung durch den Nutzer gesteuert wird.

Weiter schließt die Erfindung den Gedanken ein, der Speichereinrichtung und wahlweise auch der Übertragungseinrichtung Authentisierungsmittel zum Schutz der sensiblen benutzerspezifischen Daten (eben der Kreditkarte- oder Kundenkarten- oder Kontonummer o. ä.) vor einem unbefugten Zugriff auf den Speicher oder die Übertragungseinrichtung zuzuordnen.

In einer bevorzugten Ausführung umfasst die Eingabeeinrichtung Zifferntasten, zweckmäßigerweise die Zifferntastatur eines Telefons oder eines Zusatzmoduls zu einem solchen.

Alternativ hierzu kann die Eingabe der benutzerspezifischen Daten auch mittel der Sprechkapsel des Telekommunikations-Endgerätes sowie einer dieser nachgeschalteten Sprachspeicher- oder -verarbeitungseinrichtung erfolgen.

In beiden Fällen erfordert die Realisierung der Dateneingabe keine Änderung der vertrauten Benutzeroberfläche des Endgerätes, und im Falle der Eingabe über die Zifferntasten auch nur geringfügige hardwaremäßige Ergänzungen im Geräteinneren. Für eine Spracheingabe ist, insbesondere gegenüber einem einfachen Festnetztelefon, dem gegenüber natürlich ein höherer Hardwareaufwand zu betreiben, bei einem komfortablen Mobiltelefon sind aber auch hierfür die wesentlichen Hardwarevoraussetzungen bereits vorhanden.

In einer weiteren bevorzugten Ausführung, für die die Voraussetzungen ebenfalls bei einem Mobiltelefon am günstigsten sind, wird die Eingabe im Rahmen einer speziellen Menüführung realisiert. Dem kann ein spezieller Menüpunkt bzw. -abschnitt "Bezahl-Info" (oder ähnlich) dienen, der den Zugriff auf die Speichereinrichtung für die Kreditkartennummer o. ä. nach Eingabe der vorbestimmten Authentikationsdaten freigibt.

Als Authentikationsdaten sind - in an sich bekannter Auswahl - beispielsweise ein Passwort, eine kurze Ziffernkombination (PIN = Personal Identication Number) oder auch biometrische Daten, wie etwa ein Fingerabdruck oder eine Sprachprobe, oder in einer universellen SmartCard gespeicherte Daten nutzbar. Entsprechend der gewählten Authentikationsmethode weisen die Authentisierungsmittel geeignete Eingabe-, Vergleichs- und Speichermittel auf.

Am einfachsten zu realisieren ist in einem Telekommunikations-Endgerät sicherlich die Eingabe, Speicherung und Auswertung einer PIN. Etwas aufwendiger und bei einfachen Festnetz-Endgeräten, die nicht über eine zumindest auf alphanummerischen Modus schaltbare Tastatur verfügen, nicht ohne weiteres realisierbar ist die Authentikation über ein Passwort, und die Authentikation über biometrische Daten ist wegen des relativ hohen Hard- und Softwareaufwandes wohl eher als Zukunftslösung anzusehen. Sie hat im übrigen bekanntlich den Nachteil, dass die Zugriffserlaubnis unbedingt an das Vorliegen der biometrischen Merkmale geknüpft und daher nicht übertragbar ist.

Die Übertragung der aus der Speichereinrichtung aufgerufenen Karteninformation ist auf verschiedene Arten möglich, die jeweils in einem bestimmten Kontext gewisse Vorteile aufweisen. Aufgrund der Einfachheit und Brauchbarkeit auch für das Festnetz ist hier sicher zuerst das Mehrfrequenz-Tonübertragungsverfahren (DTMF = Dual Tone Multiple Frequency) zu nennen, das für vergleichbare Anwendungen - beispielsweise die Kommunikation mit Telefoncomputern von Banken o. ä. - seit Jahren bewährt ist. Weiterhin ist eine Übertragung über ein vorkonfiguriertes Fax oder E-Mail Programm möglich, die natürlich am einfachsten in einem Endgerät mit bereits vorgesehenem Faxmodus realisierbar ist.

Gemäß den Mobilfunkstandards kommt insbesondere auch eine Übertragung als "Unstructured Supplementary Service Data" (USSD) oder als "Short Massage" oder zukünftig GPRS in Frage. So ist nach dem heute gebräuchlichen GSM-Standard parallel zu einer Sprachverbindung die Absendung und der Empfang von kurzen Textnachrichten im Rahmen des SMS oder zukünftig E-Mail möglich. Die so versandten Daten können sogar mit Hilfe des "SIM Application Tool Kit" verschlüsselt werden, um - zusätzlich zu den ohnehin hochstehenden Verschlüsselungsverfahren der Mobilfunktechnik - zusätzliche Sicherheit auf dem Übertragungsweg zu schaffen. Natürlich ist dann eine entsprechende empfängerseitige Entschlüsselung erforderlich.

Schließlich ist eine Sprachübertragung möglich und aufgrund der Hardwarevoraussetzungen speziell von Festnetztelefonen mit integriertem Anrufbeantworter oder von Mobiltelfonen mit Sprachspeicher auch relativ unaufwendig realisierbar. Auch die Umwandlung der eingegebenen Nummern in gesprochenen Text mit einem einfachen.Sprachsynthesizer wäre denkbar.

Insbesondere für ein Mobilfunk-Endgerät, gegebenenfalls aber auch für komfortable Festnetz-Endgeräte (beispielsweise ein Kombifaxgerät) ist die Vorkonfiguration mehrerer Übertragungsmöglichkeiten für die gespeicherten Karten- bzw. Kontodaten von Vorteil, um gegebenenfalls unterschiedlichen Anforderungen der Anbieter hinsichtlich der Datenübertragung gerecht werden zu können. Bei einem Mobilfunk-Endgerät oder modernen Komforttelefon wird die entsprechende Auswahl wiederum am sinnvollsten im Rahmen einer Menüsteuerung erfolgen können.

Die Speichereinrichtung für die benutzerspezifischen Daten ist bevorzugt als Mehrbereichsspeicher mit wahlfreiem Zugriff ausgebildet, um - entsprechend den Notwendigkeiten des modernen Geschäftsverkehrs - eine Mehrzahl von Kreditkarten-, Kundenkarten- oder Kontonummern abrufbar speichern zu können. Die Betätigungseinrichtung ist dann natürlich als Auswahleinrichtung auszuführen. Auch diese Auswahleinrichtung ist - jedenfalls bei einem Mobiltelefon - am komfortabelsten über eine Menüführung zu realisieren. Von künftig hoher Relevanz ist eine bevorzugte Ausführung, bei der das Telekommunikations-Endgerät Mittel zur Übertragung der benutzerspezifischen Daten an den Abfrager über ein IP-Netz, insbesondere das Internet aufweist - etwa einen vorinstallierten Internet-Browser.

Die Anwendungsmöglichkeiten der Erfindung lassen sich wesentlich vergrößern in einer Ausführung, bei der die Eingabeund/oder die Speichereinrichtung und insbesondere beide Einrichtungen in einem Zusatzmodul mit separatem Gehäuse-zum Anschluss an ein bereits vorhandenes Mobiltelefon oder anderes Telekommunikations-Endgerät untergebracht sind. Hiermit ist nämlich die Nachrüstung bereits vorhandener Geräte möglich, die über eine datenfähige Schnittstelle verfügen. Ein solches Zusatzmodul kann natürlich noch weitere, das Leistungsspektrum des vorhandenen Endgerätes erweiternde Komfortfunktionen realisieren und gegebenenfalls auch als Zusatzgerät zu anderen technischen Geräten dienen. Speziell hier erscheint auch eine Realisierung von Authentisierungsmitteln zur Auswertung biometrischer Daten oder die Ausrüstung mit einem SmartCard-Leser als zweckmäßig.

Vorteile und Zweckmäßigkeit in der Erfindung ergeben sich im übrigen aus den Unteransprüchen sowie der nachfolgenden Beschreibung bevorzugter Ausführungsbeispiele anhand der Figuren. Von diesen zeigen:
Fig. 1 eine Prinzipdarstellung zur Erläuterung einer ersten Ausführungsform in Form eines Funktions-Blockschaltbildes und
Fig. 2 eine Prinzipdarstellung zur Erläuterung einer zweiten Ausführungsform in Form eines Funktions-Blockschaltbildes.

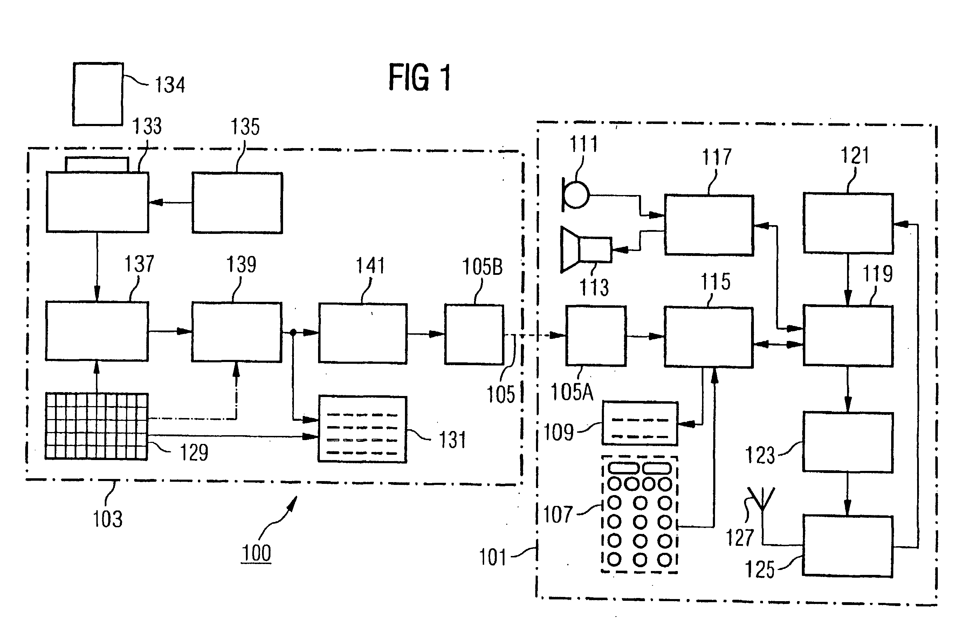

Fig. 1 zeigt eine Mobilfunk-Endgerätekonfiguration 100 aus einem Mobiltelefon 101 und einem Zusatzgerät 103. Das Mobiltelefon 101 und das Zusatzgerät 103 sind über eine Infrarot-Übertragungsstrecke 105 miteinander verbunden, die auf Seiten des Mobiltelefons 101 eine erste Schnittstelle 105A und auf Seiten des Zusatzgerätes 103 eine zweite Schnittstelle 105B aufweist.

Das Mobiltelefon 101 hat hardwaremäßig einen an sich bekannten Aufbau. Dieser umfasst eine Eingabetastatur 107, eine LCD-Anzeigeeinheit 109, eine Sprechkapsel 111 sowie eine Hörkapsel 113 als übliche Ein- und Ausgabemittel. Die Eingabetastatur 107 und die LCD-Anzeigeeinheit 109 sind über einen Controller 115 und die Sprechkapsel 111 sowie die Hörkapsel 113 über eine NF-Stufe 117 mit einer Basisband-Verarbeitungsstufe 119 verbunden. Die letztere ist eingangsseitig mit einem Empfangsteil 121 und ausgangsseitig mit einem Sendeteil 123 verbunden, die beide über einen Diplexer 125 mit einer Antenne 127 des Mobiltelefons 101 verbunden sind.

Das Zusatzgerät 103 weist eine eigene, alphanumerische Tastatur 129 und eine großflächige alphanumerische Anzeigeeinheit 131 auf. Weiterhin weist das Zusatzgerät 103 eine Kartenleseund -auswertungseinheit 133 für eine SmartCard 134 auf, wobei der Kartenlese- und -auswertungseinheit 133 eine Authentikations-Speichereinheit 135 zugeordnet ist. Eine Freigabeschaltstufe 137, die über die Kartenlese- und -auswertungseinheit 123 gesteuert wird, ist zwischen den Ausgang der Tastatur 129 und den Eingang einer Kartennummer-Speichereinheit 139 geschaltet. Deren Ausgang ist über eine Verschlüsselungsstufe 141 mit dem Eingang der zweiten Infrarot-Schnittstelle 105B verbunden. Weiterhin weist auch das Zusatzgerät 103 die üblichen Elemente einer Mikroprozessorsteuerung, d. h. einen Prozessor/Controller, einen Arbeitsspeicher und einen Programmspeicher auf, die in an sich bekannter Weise mit der Eingabetastatur 129 und der Anzeigeeinheit 131 zusammenwirken - diese Mikroprozessorsteuerung ist aber im Interesse einer besseren Übersichtlichkeit nicht dargestellt.

Bei der hier gezeigten Mobilfunk-Endgerätekonfiguration ermöglicht das Zusatzgerät 103 die Nutzung umfangreicher Mehrwertdienste, die mit dem Mobiltelefon 101 allein gar nicht oder nur mit sehr umständlichen Eingaben genutzt werden können. Im Rahmen der Ausführung der Erfindung ist hiervon die Realisierung der Bestellung von Waren und Dienstleistungen und deren Bezahlungen über das Mobilfunknetz relevant. Der Benutzer authentisiert sich durch Einschieben seiner SmartCard 134 in die Kartenlese- und -auswertungseinheit 133, in der in an sich bekannter Weise die auf der SmartCard 134 gespeicherten Daten ausgewertet werden. Bei positivem Authentifizierungsergebnis wird über die Freigabeschaltstufe 137 sowohl die Eingabe als auch die Änderung oder der Abruf von Speicherinhalten der Kartennummer-Speichereinheit 139 über die Eingabetastatur 129 und die Anzeigeeinheit 131 freigegeben. In die Speichereinheit 139 können in einer Mehrzahl von Speicherbereichen 139i tabellanartig jeweils ein Zuordnungs- bzw. Identifikationscode und eine Ziffernfolge aus Kredit- bzw. Kundenkartennummer und Gültigkeitszeitraum oder eine Kontonummer nicht-flüchtig gespeichert werden.

Wenn über das Mobiltelefon 101 eine Verbindung zu einem Waren- oder Dienstleistungsanbieter aufgebaut wurde und Übereinstimmung über die Lieferung einer bestimmten Ware oder Dienstleistung erzielt wurde, so wird unter Nutzung der über den Controller 115 des Mobiltelefons 101 realisierten Menüführung über dessen Eingabetastatur 107 ein Menüpunkt gewählt, der die Aktivierung der Infrarot-Übertragungsstrecke 105 mit dem Zusatzgerät 103 zur Übermittlung der Nummer und des Gültigkeitsdatums einer bestimmten Kreditkarte aus der Kartennummer-Speichereinheit 139 über die Verschlüsselungsstufe 141 und die Interfaces 105B, 105A zum Controller 115 des Mobiltelefons 101 sowie die Aussendung der Daten von diesem an ein Endgerät des Anbieters realisiert.

Die entsprechenden Befehle können, je nach konkreter Ausgestaltung der Funktionsteilung zwischen Mobiltelefon 101 und Zusatzgerät 103, entweder über die Eingabetastatur 107 des Mobiltelefons oder die Tastatur 129 des Zusatzgerätes eingegeben werden. In jedem Fall werden die Daten in geeignet verschlüsselter Form unmittelbar aus der Speichereinheit 139 bereitgestellt und geeignet verschlüsselt, womit ein Nachsuchen der Daten auf der Karte (oder in einem Notizbuch oder einer Datenbasis o. ä.) sowie ein Einsprechen oder eine andere aktuelle Eingabe entfallen. Damit entfällt auch die Gefahr, dass unbefugte Dritte bei diesem Eingabevorgang die Kartendaten abgreifen können, und für den Benutzer gestaltet sich die Bereitstellung der benötigten Daten für den Geschäftspartner wesentlich komfortabler.

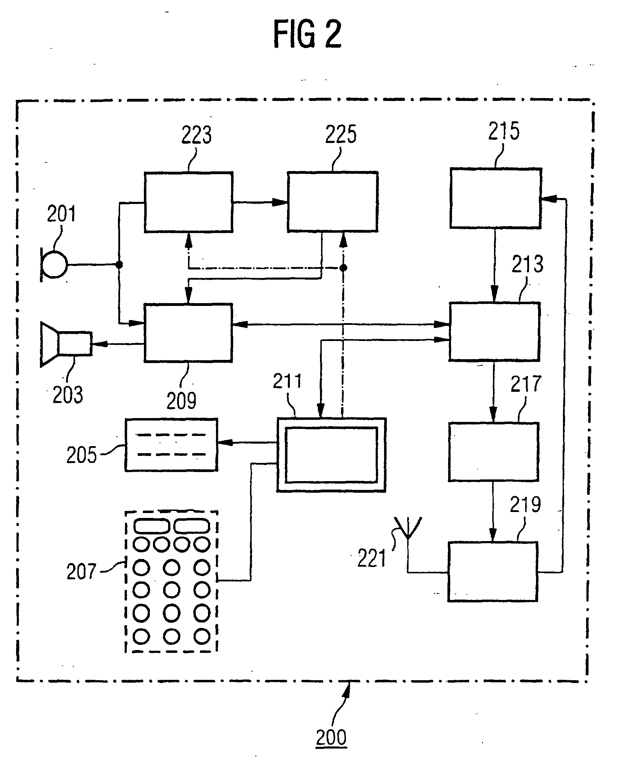

In Fig. 2 ist eine zweite Ausführungsform in Form eines schematisch als Funktions-Blockschaltbild skizzierten Mobiltelefons 200 dargestellt. Auch dieses Mobiltelefon 200 weist einen an sich bekannten Grundaufbau auf. Dieser umfasst insbesondere eine Sprechkapsel 201, eine Hörkapsel 203, eine LCD-Anzeigeeinheit 205 und eine Eingabetastatur 207 als Ein- und Ausgabeelement, von denen die Sprechkapsel 201 und die Hörkapsel 203 mit einer NF-Stufe 209 und die Anzeigeeinheit 205 sowie die Eingabetastatur 207 mit einem Controller 211 verbunden sind. Sowohl die NF-Stufe 209 als auch der Controller 211 sind mit einer Basisband-Verarbeitungsstufe 213 verbunden, welche eingangsseitig mit einem HF-Empfangsteil 215 und ausgangsseitig mit einem Sendeteil 217 verbunden ist, die ihrerseits über einen Diplexer 219 mit einer Antenne 221 verbunden sind. Insoweit entspricht der Aufbau auch dem des in Fig. 1 gezeigte Mobiltelefons 101.

Die Sprechkapsel 201 ist hier außerdem über eine Freigabeschaltstufe 223 eingangsseitig mit einer Sprachspeichereinheit 225 verbunden, welche ihrerseits ausgangsseitig mit der NF-Stufe 209 verbunden ist. Sowohl die Freigabeschaltstufe 223 als auch die Sprachspeichereinheit 225 sind über Steuersignaleingänge zudem mit dem Ausgang des Controllers 211 verbunden.

Das oben bereits erwähnte Szenarium der Übermittlung einer Kreditkarten- oder Kontonummer o. ä. während einer bestehenden Mobilfunkverbindung zu einem Waren- oder Leistungsanbieter wird hier wie folgt realisiert: Vorab wird über die Sprechkapsel 201 und die über den Controller 211 auf Freigabe geschaltete Freigabeschaltstufe 223 in die Sprachspeicherstufe 225 eine Ziffernfolge aus Kartennummer und Gültigkeitszeitpunkt eingespeichert. Nach Betätigung eines Softkey der Eingabetastatur 207 wird diese unter Steuerung durch den Controller 211 aus dem Sprachspeicher 225 an die NF-Stufe 209 ausgegeben. Nach entsprechender Verarbeitung in der Basisband-Verarbeitungsstufe 213 und der Sendestufe 217 wird sie an das Endgerät des Waren- bzw. Leistungsanbieters übermittelt. Die Authentisierung erfolgt hier per Eingabe einer zusätzlichen PIN oder eines Passworts über die Eingabetastatur 207. Als Sprachspeicherstufe 225 kann eine an sich in Mobiltelefonen heute bereits vorgesehene Sprachspeichereinheit Verwendung finden, es kann aber auch eine zusätzliche Einheit speziell zur Speicherung der Karteninformation als Sprachinformation vorgesehen sein.

Die Ausführung der Erfindung ist nicht auf die oben beschriebenen Beispiele beschränkt, sondern auch in einer Vielzahl von Abwandlungen möglich die im Rahmen fachgemäßen Handelns liegen. So ist sie insbesondere auch bei einem Festnetz--Telefon möglich und auch hierbei können die zur Eingabe, Speicherung und Übertragung der Kartendaten vorgesehenen Komponenten entweder in einem - entsprechend komfortabel ausgestatteten - Telefon selbst oder in einem mit diesem verbundenen Zusatzgerät vorgesehen sein. Sofern eine Spracheingabe vorgesehen ist (wie bei der Ausführung in Fig. 2), kann diese auch mit einer nachgeschalteten Sprach-Text-Wandlung und Mitteln zur Übertragung der als Sprachinformation eingegebenen Daten im Textformat verbunden sein.

Anstelle einer Infrarotverbindung zwischen dem eigentlichen Endgerät und einem Zusatzgerät kann auch eine leitungsgebundene Verbindung oder künftig auch eine spezielle Funkverbindung (Bluetooth) vorgesehen sein.

## Patentansprüche

1. Telekommunikations-Endgerät (100; 200) mit
einer Speichereinrichtung (139; 225) zur Speicherung benutzerspezifischer Daten,
einer ausgangsseitig mit der Speichereinrichtung verbundenen Eingabeeinrichtung (129; 201) zur Eingabe der benutzerspezifischen Daten in die Speichereinrichtung und mit einer eingangsseitig mit der Speichereinrichtung verbundenen Übertragungseinrichtung (119 bis 127; 213 bis 221) zur Übertragung der benutzerspezifischen Daten an einen anderen Teilnehmer in einem Telekommunikationsnetz,
wobei die Speichereinrichtung und die Übertragungseinrichtung zur Speicherung mindestens einer Ziffernfolge und deren Übertragung während des Bestehens einer Verbindung mit dem anderen Teilnehmer ausgebildet sind,
wobei weiter Betätigungsmittel (107; 207) zur Übergabe der benutzerspezifischen Daten aus der Speichereinrichtung an die Übertragungseinrichtung während des Bestehens der Verbindung vorgesehen sind und
wobei Authentisierungsmittel (133 bis 135; 207) zum Schutz der benutzerspezifischen Daten vor einem unbefugten Zugriff vorgesehen sind
**dadurch gekennzeichnet,**
**daß** die Übertragungseinrichtung (119 bis 127; 213 bis 221) eine Mehrzahl von vorkonfigurierten Übertragungsmitteln (119 bis 127; 213 bis 221) aufweist, welchen jeweils ein bestimmtes Übertragungsverfahren zugeordnet ist, und daß eine Auswahleinrichtung (107; 207) zur Auswahl eines von mehreren vorkonfigurierten Übertragungsmitteln (119 bis 127; 213 bis 221) vorgesehen ist.

2. Telekommunikations-Endgerät nach Anspruch 1,
**dadurch gekennzeichnet,**
**dass** die Eingabeeinrichtung (129) Zifferntasten umfasst.

3. Telekommunikations-Endgerät nach Anspruch 1 oder 2,
**dadurch gekennzeichnet,**
**dass** die Eingabeeinrichtung eine Sprechkapsel (201) umfasst und dieser eine Sprachspeicher- oder - verarbeitungseinrichtung nachgeschaltet ist.

4. Telekommunikations-Endgerät nach einem der vorangehenden Ansprüche,
**dadurch gekennzeichnet,**
**dass** die Eingabeeinrichtung (129) und/oder die Betätigungsmittel (107; 207) eine Menüführung aufweisen.

5. Telekommunikations-Endgerät nach einem der vorangehenden Ansprüche,
**dadurch gekennzeichnet,**
**dass** die Authentisierungsmittel an eine Authentisierung mittels Passwort, PIN oder biometrischer Daten angepasste Eingabe-, Vergleicher- und Speichermittel (133 bis 135) umfassen.

6. Telekommunikations-Endgerät nach einem der vorangehenden Ansprüche,
**dadurch gekennzeichnet,**
**dass** die Übertragungseinrichtung Mehrfrequenz-Übertragungsmittel aufweist.

7. Telekommunikations-Endgerät nach einem der vorangehenden Ansprüche,
**dadurch gekennzeichnet,**
**dass** die Übertragungseinrichtung (213 bis 221) Sprachübertragungsmittel (209) aufweist.

8. Telekommunikations-Endgerät nach einem der vorangehenden Ansprüche,
**dadurch gekennzeichnet,**
**dass** die Übertragungseinrichtung (119 bis 127) Daten-Fax-, SMS- oder USSD-Übertragungsmittel aufweist.

9. Telekommunikations-Endgerät nach einem der vorangehenden Ansprüche,
**dadurch gekennzeichnet,**
**daß** die Auswahleinrichtung (107; 207) im Rahmen einer Menüführung realisiert ist.

10. Telekommunikations-Endgerät nach einem der vorangehenden Ansprüche,
**dadurch gekennzeichnet,**
**dass** die Speichereinrichtung (139) als Mehrbereichsspeicher zur Speicherung einer Mehrzahl von Ziffernfolgen in den jeweils über die Betätigungsmittel zugreifbaren Speicherbereichen (139i) ausgebildet ist.

11. Telekommunikations-Endgerät nach einem der vorangehenden Ansprüche,
**dadurch gekennzeichnet,**
**dass** der Übertragungseinrichtung Verschlüsselungsmittel (141) zur Verschlüsselung der benutzerspezifischen Daten vor bzw. bei der Übertragung zugeordnet sind.

12. Telekommunikations-Endgerät nach einem der vorangehenden Ansprüche,
**gekennzeichnet durch**
die Ausführung als Mobiltelefon (101; 200).

13. Telekommunikations-Endgerät nach einem der vorangehenden Ansprüche,
**dadurch gekennzeichnet,**
**dass** die Übertragungseinrichtung zur Übertragung der benutzerspezifischen Daten über ein IP-Netz, insbesondere das Internet, ausgebildet ist, wobei sie insbesondere einen Web-Browser aufweist.

14. Telekommunikations-Endgerät nach einem der vorangehenden Ansprüche,
**dadurch gekennzeichnet,**
**dass** die Eingabeeinrichtung (129) und/oder die Speichereinrichtung (139), insbesondere beide, in einem über eine datenfähige Schnittstelle (105A, 105B) anschließbaren Zusatzmodul (103) zu einem Telefon, insbesondere einem Mobiltelefon, mit separatem Gehäuse aufgenommen sind.

15. Telekommunikations-Endgerät nach Anspruch 14,
**dadurch gekennzeichnet,**
**dass** das Zusatzmodul (103) eine Ziffern- oder alphanummerische Tastatur (129) oder einen Touch-Screen aufweist.

## Claims

1. Telecommunications terminal (100; 200) having
a memory device (139; 225) for storing user-specific data,
an input device (129; 201), whose output is connected to the memory device, for inputting the user-specific data into the memory device, and having
a transmission device (119 to 127; 213 to 221), whose input is connected to the memory device, for transmitting the user-specific data to another subscriber in a telecommunications network,
where the memory device and the transmission device are designed to store at least one string of digits and to transmit it while a connection to the other subscriber exists,
where actuation means (107; 207) for transferring the user-specific data from the memory device to the transmission device while the connection exists are also provided, and
where authentication means (133 to 135; 207) for protecting the user-specific data against unauthorized access are provided,
**characterized**
**in that** the transmission device (119 to 127; 213 to 221) has a plurality of preconfigured transmission means (119 to 127; 213 to 221) which each have a particular associated transmission method, and in that a selection device (107; 207) for selecting one or more preconfigured transmission means (119 to 127; 213 to 221) is provided.

2. Telecommunications terminal according to Claim 1,
**characterized**
**in that** the input device (129) comprises digit keys.

3. Telecommunications terminal according to Claim 1 or 2,
**characterized**
**in that** the input device comprises a microphone (201), and a voice memory or voice processing device is connected downstream of said microphone.

4. Telecommunications terminal according to one of the preceding claims,
**characterized**
**in that** the input device (129) and/or the actuation means (107; 207) have menu guidance.

5. Telecommunications terminal according to one of the preceding claims,
**characterized**
**in that** the authentication means comprise input, comparison and storage means (133 to 135) suited to authentication by means of password, PIN or biometric data.

6. Telecommunications terminal according to one of the preceding claims,
**characterized**
**in that** the transmission device has multifrequency transmission means.

7. Telecommunications terminal according to one of the preceding claims,
**characterized**
**in that** the transmission device (213 to 221) has voice transmission means (209).

8. Telecommunications terminal according to one of the preceding claims,
**characterized**
**in that** the transmission device (119 to 127) has data fax, SMS or USSD transmission means.

9. Telecommunications terminal according to one of the preceding claims,
**characterized**
**in that** the selection device (107; 207) is produced within the context of menu guidance.

10. Telecommunications terminal according to one of the preceding claims,
**characterized**
**in that** the memory device (139) is in the form of a multi-area memory for storing a plurality of strings of digits in the memory areas (139i), which can each be accessed using the actuation means.

11. Telecommunications terminal according to one of the preceding claims,
**characterized**
**in that** the transmission device has associated encryption means (141) for encrypting the user-specific data before and/or during transmission.

12. Telecommunications terminal according to one of the preceding claims,
**characterized by**
its being in the form of a mobile telephone (101; 200).

13. Telecommunications terminal according to one of the preceding claims,
**characterized**
**in that** the transmission device is designed to transmit the user-specific data via an IP network, in particular the Internet, and has a web browser, in particular.

14. Telecommunications terminal according to one of the preceding claims,
**characterized**
**in that** the input device (129) and/or the memory device (139), in particular both, are held in a supplementary module (103), which can be connected via an interface (105A, 105B) with data capability, for a telephone, in particular a mobile telephone, having a separate housing.

15. Telecommunications terminal according to Claim 14,
**characterized**
**in that** the supplementary module (103) has a digit or alphanumeric keypad (129) or a touch screen.

## Revendications

1. Terminal de télécommunication (100; 200) ayant
un dispositif de mémorisation (139; 225) destiné à la mémorisation de données spécifiques à l'utilisateur
un dispositif de saisie (129; 201), relié côté sortie au dispositif de mémorisation et destiné à la saisie des données spécifiques à l'utilisateur dans le dispositif de mémorisation, et
un dispositif de transmission (119 à 127; 213 à 221), relié côté entrée au dispositif de mémorisation et destiné à la transmission des données spécifiques à l'utilisateur à un autre abonné dans un réseau de télécommunication,
le dispositif de mémorisation et le dispositif de transmission étant conçus pour la mémorisation d'au moins une séquence de chiffres et pour leur transmission pendant la durée d'une communication avec l'autre abonné,
des moyens de manoeuvre (107; 207) étant, en outre, prévus pour le transfert des données spécifiques à l'utilisateur du dispositif de mémorisation au dispositif de transmission pendant la durée de la communication et
des moyens d'authentification (133 à 135; 207) étant prévus pour la protection des données spécifiques à l'utilisateur contre un accès non autorisé,
**caractérisé par le fait**
**que** le dispositif de transmission (119 à 127; 213 à 221) comporte une pluralité de moyens de transmission (119 à 127; 213 à 221) configurés au préalable, à chacun desquels est affecté un procédé de transmission déterminé, et qu'il est prévu un dispositif de sélection (107; 207) destiné à la sélection de l'un de plusieurs moyens de transmission (119 à 127; 213 à 221) configurés au préalable.

2. Terminal de télécommunication selon la revendication 1
**caractérisé par le fai**t
que le dispositif de saisie (129) comporte des touches à chiffres.

3. Terminal de télécommunication selon la revendication 1 ou 2
**caractérisé par le fait**
**que** le dispositif de saisie comporte une capsule microphonique (201) et que, en aval de celle-ci, est monté un dispositif de mémorisation de la parole ou un dispositif de traitement de la parole.

4. Terminal de télécommunication selon l'une des revendications précédentes
**caractérisé par le fait**
**que** le dispositif de saisie (129) et/ou les moyens de manoeuvre (107; 207) comportent un pilotage par menu.

5. Terminal de télécommunication selon l'une des revendications précédentes
**caractérisé par le fait**
**que** les moyens d'authentification comportent des moyens de saisie, de comparaison et de mémorisation (133 à 135) adaptés à une authentification au moyen d'un mot de passe, d'un numéro d'identification personnel (ou PIN) ou de données biométriques.

6. Terminal de télécommunication selon l'une des revendications précédentes
**caractérisé par le fait**
**que** le dispositif de transmission comporte des moyens de transmission multifréquences.

7. Terminal de télécommunication selon l'une des revendications précédentes
**caractérisé par le fait**
**que** le dispositif de transmission (213 à 221) comporte des moyens de transmission de la parole (209).

8. Terminal de télécommunication selon l'une des revendications précédentes
**caractérisé par le fait**
**que** le dispositif de transmission (119 à 127) comporte des moyens de transmission de données, de fac-similé, de messages courts (ou SMS) ou de USSD ("Unstructured Supplementary Service Data").

9. Terminal de télécommunication selon l'une des revendications précédentes
**caractérisé par le fait**
**que** le dispositif de sélection (107; 207) est réalisé dans le cadre d'un pilotage par menu.

10. Terminal de télécommunication selon l'une des revendications précédentes
**caractérisé par le fait**
**que** le dispositif de mémorisation (139) est conçu comme mémoire multizone destinée à la mémorisation d'une pluralité de séquences de chiffres chacune dans une des zones de mémorisation (139i) accessibles par l'intermédiaire des moyens de manoeuvre.

11. Terminal de télécommunication selon l'une des revendications précédentes
**caractérisé par le fait**
**que** des moyens de cryptage (141), destinés au cryptage des données spécifiques à l'utilisateur avant et, respectivement, après la transmission, sont affectés au dispositif de transmission.

12. Terminal de télécommunication selon l'une des revendications précédentes
**caractérisé par**
la réalisation en tant que téléphone portable (101; 200).

13. Terminal de télécommunication selon l'une des revendications précédentes
**caractérisé par le fait**
**que** le dispositif de transmission est conçu pour la transmission des données spécifiques à l'utilisateur par l'intermédiaire d'un réseau IP, notamment du réseau Internet, ceux-ci comportant, notamment, un navigateur de réseau.

14. Terminal de télécommunication selon l'une des revendications précédentes
**caractérisé par le fait**
**que** le dispositif de saisie (129) et/ou le dispositif de mémorisation (139), notamment, les deux, sont montés dans un module d'extension (103) avec un coffret séparé, pouvant être raccordé par l'intermédiaire d'une interface apte aux données (105A, 105B) à un téléphone, notamment à un téléphone portable.

15. Terminal de télécommunication selon la revendication 14
**caractérisé par le fait**
**que** le module d'extension (103) comporte un clavier à chiffres ou un clavier alphanumérique (129) ou un écran tactile (ou touch-screen).
